# FASCICULE DE BREVET EUROPEEN

(11) **EP 4 390 468 B1**
(45) Date de publication et mention de la délivrance du brevet: **28.10.2026**
(21) Numéro de dépôt: 23215082.1
(22) Date de dépôt: 07.12.2023
(51) Int. Cl.: G01V 20/00

(54) **PROCEDE POUR QUANTIFIER LES DEPLACEMENTS DANS UN MODELE ANALOGIQUE REPRESENTANT L EVOLUTION DE LA DEFORMATION D'UNE FORMATION SOUTERRAINE**
VERFAHREN ZUR QUANTIFIZIERUNG VON BEWEGUNGEN IN EINEM ANALOGMODELL, DAS DIE EVOLUTION DER VERFORMUNG EINER UNTERIRDISCHEN FORMATION REPRÄSENTIERT
METHOD FOR QUANTIFYING MOVEMENTS IN AN ANALOG MODEL REPRESENTING THE VARIATION IN THE DEFORMATION OF A SUBSURFACE FORMATION

(30) Priorité: 19.12.2022 FR 2213818
(43) Date de publication de la demande: 26.06.2024
(73) Titulaire: IFP Energies nouvelles, 92500 Rueil-Malmaison (FR)
(72) Inventeur: SCHUELLER MESSIER, Sylvie, 92852 RUEIL-MALMAISON CEDEX (FR); MENGUS, Jean-Marie, 92852 RUEIL-MALMAISON CEDEX (FR); LECOMTE, Jean-Francois, 92852 RUEIL-MALMAISON CEDEX (FR)
(74) Mandataire: IFP Energies nouvelles

(56) Documents cités:
- FABIEN GRAVELEAU ET AL: "Experimental modelling of orogenic wedges: A review", TECTONOPHYSICS, ELSEVIER, AMSTERDAM, NL, vol. 538, 19 January 2012 (2012-01-19), pages 1 - 66, XP028419707, ISSN: 0040-1951, [retrieved on 20120201], DOI: 10.1016/J.TECTO.2012.01.027
- HORN B K P ET AL: "DETERMINING OPTICAL FLOW", ARTIFICIAL INTELLIGENCE, ELSEVIER SCIENCE PUBLISHER B.V., AMSTERDAM, NL, vol. 17, 1 August 1981 (1981-08-01), pages 185 - 203, XP000195787, ISSN: 0004-3702, DOI: 10.1016/0004-3702(81)90024-2

## Description

### Domaine technique

La présente invention concerne le domaine des géosciences, en particulier le domaine de la géologie structurale avec des applications dans le domaine de l'exploration et de l'exploitation des gisements pétroliers ou de sites de stockage géologique de gaz (H₂, CO₂, CH₄, ...).

Plus précisément, cette invention concerne le domaine de la modélisation analogique en géologie structurale.

La modélisation analogique en géologie est une technique éprouvée pour comprendre l'organisation tridimensionnelle des structures géologiques et l'histoire de la déformation qui a conduit à ces structures. Elle consiste à reproduire les couches géologiques de manière physique en se fondant sur leur comportement mécanique. On distingue deux comportements mécaniques principaux : un comportement fragile et un comportement ductile pour les matériaux géologiques à l'échelle crustale. Un modèle analogique consiste donc à reproduire une stratification mécanique en utilisant des matériaux fragiles et des matériaux ductiles, qui sont placés dans une boîte de déformation. Le dimensionnement pour mettre à l'échelle les modèles se fait en longueurs, en temps et en force, comme décrit par exemple dans le document (Schellart et Strak, 2016). Les épaisseurs des couches (faisant entre quelques millimètres et quelques centimètres dans le modèle) représentent ainsi généralement des épaisseurs de l'ordre de 50 à 5000 m dans la nature. Une heure de déformation au niveau expérimental pourra représenter un million d'années de déformation par exemple. Les matériaux utilisés sont variés ; cependant, classiquement, du sable sec, de la poudre de verre ou des microbilles de verre (de granulométrie 70-200µm) sont utilisés pour représenter les couches fragiles, tandis que les couches ductiles sont représentées par de la silicone (PDMS), comme par exemple décrit dans les documents (Weijermars et Schmeling, 1986 ; Schellart et Strak, 2016).

### Technique antérieure

Les documents suivants seront cités au cours de la description :
Adam J., Schreurs G., Klinkmüller M., Wieneke B. (2008) 2D/3D strain localisation and fault simulation in analogue experiments: insights from X-Ray tomography and tomographie image correlation, Bollettino di geofisica teorica ed applicata, Vol. 49, Suppl. 1, p.21-22 ({HYPERLINK https://bgo.ogs.it/authors.php}).
Colletta B., Letouzey J., Pinedo R., Ballard J.-F., Balé P. (1991) Computerized X-ray tomography analysis of sandbox models: Examples of thin-skinned thrust systems, Geology, 19, p. 1063-1067.
Dooley T. P., Hudec M. R., Carruthers D., Jackson M. P. A., Luo G. (2017) The effects of base-salt relief on salt flow and suprasalt deformation patterns - Part 1: Flow acress simple steps in the base of salt, Interpretation, SEG, Vol. 5, No 1, p. 1-23.
Farnebäck, G. (2003) « Two-frame motion estimation based on polynomial expansion », Proceedings of the 13th Scandinavian conference on Image analysis (SCIA'03), Josef Bigun and Tomas Gustavsson (Eds.). Springer-Verlag, Berlin, Heidelberg, p. 363-370
Horn, B.K.P. and Schunck, B.G (1981) "Determining optical flow." Artificial Intelligence, vol 17, pp 185-203.
Lucas B. D. and Kanade T. (1981) An iterative image registration technique with an application to stereo vision. [archive] Proceedings of Imaging Understanding Workshop, pages 121--130.
Schellart W. P., Strak V. (2016) A review of analogue modelling of geodynamics processes: Approaches, scaling, materials and quantification, with an application to subduction experiments, Journal of Geodynamics, 100, p. 7-32.
Shi J. and Tomasi C. (1994) "Good features to track", Proc. IEEE Comput. Soc. Conf. Comput. Vision and Pattern Recogn., pages 593-600.
Weijermars R., Schmeling H. (1986) Scaling of newtonian and non-newtonian luid dynamics without inertia for quantitative modelling of rock flow due to gravity (including the concept of rheological similarity), Physics of the Earth and Planetary Interiors, 43, p. 316-330.
Fabien Graveleau et al (2012): Experimental modelling of orogenic wedges: A review, Tectonophysics, Elsevier, vol. 538, 19 janvier 2012, pages 1-66 (ISSN: 0040-1951, DOI: 10.1016/J.TECTO.2012.01.027)

On connait notamment le document (Colletta et al., 1991) qui a le premier proposé une méthode non invasive pour suivre la déformation 3D (c'est-à-dire dans le volume du modèle analogique) au cours du temps, via l'utilisation d'un scanner-X de type médical. Plus précisément, cette méthode consiste, via un scanner-X à acquérir une succession d'images du modèle analogique au fur et à mesure de la déformation et à reconstruire le volume du modèle analogique pour chaque pas de temps via une tomographie. On obtient alors un film de l'évolution du modèle analogique dans le temps. Toutefois, seules les interfaces (limites entre les couches géologiques) ou les discontinuités dans les matériaux à comportement fragile telles que les fractures ou les failles (qui s'accompagnent d'une dilatation du matériau lors de leur formation, et qui présentent donc une densité plus faible que le matériau encaissant) sont visibles par les rayons X, l'intérieur des couches étant homogène. On n'a donc pas accès à une information quantitative du mouvement ou de la déformation à l'intérieur de chaque point du volume du modèle analogique.

On connait également la méthode décrite dans le document (Adam et al. 2008) qui concerne une méthode pour estimer la localisation de la déformation et des failles dans des modélisations analogiques au moyen d'une tomographie à rayons X et de corrélation d'images tomographiques. Plus précisément, cette méthode consiste à rechercher des similarités d'une image à une autre, par corrélation d'images, et à en déduire l'évolution dans le temps du champ de déplacement. Toutefois, comme pour la méthode précédente, seules les interfaces sont visibles par les rayons X, l'intérieur des couches étant homogène. On n'a donc pas accès aux déplacements et déformations qui pourraient avoir lieu entre les interfaces.

On connait en outre le document (Dooley et al., 2017), qui concerne une méthode consistant à ajouter des marqueurs à la surface d'un modèle analogique, pour mesurer des champs de déplacements surfaciques par un suivi des marqueurs au moyen d'un appareil photo numérique déclenché à pas de temps régulier, et d'une méthode de corrélation d'images. Toutefois, cette méthode ne permet de suivre les déplacements qu'à la surface du modèle analogique. La connaissance des déplacements à l'intérieur des couches n'est pas possible avec cette méthode, d'autant plus qu'elle n'utilise pas d'imagerie à rayons X.

La présente invention permet de pallier ces inconvénients. Notamment la présente invention vise à quantifier plus finement les déplacements à l'intérieur des couches des modèles analogiques. Plus précisément, cette invention permet, grâce à l'utilisation des rayons X et de marqueurs disposés dans les matériaux utilisés dans les modèles analogiques, d'obtenir des images 4D (volume 3D et temps) de ces modèles contenant plus d'information que ce qui est obtenu par les méthodes selon l'art antérieur. En effet, grâce à la présence des marqueurs dans le volume des couches du modèle analogique, l'analyse des images du modèle analogique obtenues par un scanner à rayons X permet de quantifier les déplacements à l'intérieur des couches, et pas seulement grâce au déplacement des interfaces des couches de matériaux ou le long des discontinuités se formant dans les matériaux fragiles, ou à la surface du modèle analogique.

### Résumé de l'invention

La présente invention concerne un procédé pour quantifier les déplacements dans un modèle analogique représentant l'évolution de la déformation d'une formation souterraine au cours des temps géologiques, selon la revendication 1.

Selon une mise en œuvre de l'invention, pour chacune desdites couches dudit modèle analogique, si ladite couche géologique correspondante a un comportement mécanique ductile, on peut mélanger au préalable ledit matériau de ladite couche dudit modèle analogique à ladite pluralité de marqueurs, et on peut déposer ledit matériau dans ladite boite de déformation.

Selon une mise en œuvre de l'invention, pour chacune desdites couches dudit modèle analogique, si ladite couche géologique correspondante a un comportement mécanique fragile, on peut verser ledit matériau de ladite couche dudit modèle analogique dans ladite boite de déformation, et on peut insérer, au fur et à mesure dudit versement dudit matériau, ladite pluralité de marqueurs.

Selon une mise en œuvre de l'invention, pour chacune desdites couches dudit modèle analogique, si ladite couche géologique correspondante a un comportement mécanique fragile, on peut utiliser du sable, de la poudre de verre ou des microbilles de verre comme matériau de ladite couche dudit modèle analogique.

Selon une mise en œuvre de l'invention, si on utilise du sable comme matériau de ladite couche dudit modèle analogique, on peut utiliser des marqueurs formés par des particules de verre expansé, de préférence de taille comprise entre 500 µm et 1000 µm.

Selon une mise en œuvre de l'invention, pour chacune desdites couches dudit modèle analogique, si la ladite couche géologique correspondante a un comportement mécanique ductile, on peut utiliser de la silicone comme matériau de ladite couche dudit modèle analogique.

Alternativement, pour chacune desdites couches dudit modèle analogique, si la ladite couche géologique correspondante a un comportement mécanique ductile, on peut utiliser des marqueurs formés par des particules de verre expansé enrobées d'iodure de potassium.

Selon une mise en œuvre de l'invention, ladite méthode de flux optique peut être choisie parmi la famille des méthodes différentielles d'estimation du flux optique, ladite méthode de flux optique de la famille des méthodes différentielles d'estimation du flux optique pouvant être une méthode globale ou une méthode locale.

Selon une mise en œuvre de l'invention selon laquelle ladite méthode de flux optique de la famille des méthodes différentielles d'estimation du flux optique est une méthode locale, on peut utiliser une méthode de détection de coins pour sélectionner des points desdites images tridimensionnelles sur lesquels ladite méthode de flux optique de la famille des méthodes différentielles locale est appliquée, on peut obtenir des vecteurs de déplacement auxdits points sélectionnés pour une desdites images tridimensionnelles de chacun desdits couples desdites images tridimensionnelles, et on peut interpoler lesdits vecteurs de déplacement obtenus auxdits points sélectionnés pour une desdites images tridimensionnelles de chacun desdits couples desdites images tridimensionnelles afin de déterminer ledit champ de déplacement pour chacun desdits couples desdites images tridimensionnelles.

Selon une mise en œuvre de l'invention, à partir au moins dudit champ de déplacement déterminé pour chacun desdits couples desdites images tridimensionnelles, on peut construire un modèle géologique numérique de ladite formation, on peut réaliser au moins une simulation géomécanique et/ou une simulation d'écoulement dans ladite formation au moyen dudit modèle géologique numérique, et à partir au moins de résultats de ladite au moins une simulation, on peut forer au moins un puits dans ladite formation pour exploiter une ressource de ladite formation ou pour stocker un fluide ou un solide dans ladite formation.

D'autres caractéristiques et avantages du procédé selon l'invention, apparaîtront à la lecture de la description ci-après d'exemples non limitatifs de réalisations, en se référant aux figures annexées et décrites ci-après.

### Liste des figures

La figure 1 illustre de manière schématique un exemple d'un modèle analogique construit dans une boite de déformation.
La figure 2A présente une image prise au scanner à rayons X d'une couche de silicone dans laquelle sont répartis des marqueurs formés par des particules de verre expansé enrobées d'iodure de potassium.
La figure 2B présente une image prise au scanner à rayons X d'une couche de sable dans laquelle des marqueurs formés par des particules de verre expansé sont répartis dans sa partie supérieure.
La figure 3A et la figure 3B présentent des coupe 2D dans des images tridimensionnelles obtenues à l'issue de l'étape b) du procédé selon l'invention, à un pas de temps t de la déformation de modèles analogiques respectivement ne comportant pas de marqueurs et comportant des marqueurs.
La figure 4A et la figure 4B correspondent à des agrandissements des coupes 2D au pas de temps t présentées sur les figures 3A et 3B, délimités par les rectangles noirs présentés sur les figures 3A et 3B respectivement.
La figure 5A et la figure 5B présentent des coupes 2D dans des images tridimensionnelles prises dans la même région que celle des figures 4A et 4B, mais à un pas de temps t+1.

### Description des modes de réalisation

L'invention concerne un procédé pour quantifier les déplacements dans (c'est-à-dire à l'intérieur) un modèle analogique représentant l'évolution de la déformation d'une formation souterraine au cours des temps géologiques.

De manière classique, un modèle analogique est une représentation d'un système physique réel par un système physique analogue. Dans le cas présent, il s'agit d'un système physique pour simuler, à petite échelle à la fois en temps et en espace, l'évolution de la déformation d'une formation souterraine au cours des temps géologiques. Il est bien clair qu'un tel modèle analogique comprend une mise à l'échelle (ou encore un dimensionnement) à la fois dans l'espace (quelques cm peuvent par exemple représenter des dimensions de l'ordre de 100 à 1000 m dans la réalité) et dans le temps (une heure peut représenter un million d'années dans la réalité), ainsi qu'une mise à l'échelle des forces appliquées (la gravité étant la même dans les modèles que sur Terre, et si l'on s'intéresse aux forces visqueuses dans les fluides visqueux utilisés pour modéliser les niveaux ductiles, une viscosité de 5.10⁴ Pa.s dans le modèle correspond à une viscosité d'environ 10¹⁷ à 10²⁰ Pa.s dans la réalité, par exemple). De telles méthodes de dimensionnement sont bien connues de l'homme du métier. On pourra se référer au document (Schellart et Strak, 2016) à titre d'exemple.

De manière classique, la construction d'un modèle analogique en géologie est réalisée par les spécialistes dans une boîte de déformation, qui peut comprendre au moins une paroi mobile ou aucune paroi mobile. Par boîte de déformation, on entend un contenant destiné à recevoir des superpositions de couches formées dans des matériaux représentatifs du comportement mécanique des couches géologiques correspondantes, et qui permet d'appliquer des conditions aux limites possiblement variables en temps et en espace aux couches

Une boîte de déformation a généralement la forme d'un parallélépipède rectangle, le plus souvent sans couvercle pour faciliter l'introduction des matériaux simulant les couches géologiques et l'observation. Les parois latérales sont constituées d'un matériau permettant une imagerie par rayons X des matériaux déposés à l'intérieur de la boîte (bois, plexiglas, par exemple), et le fond peut être plat ou présenter une forme particulière (au moyen d'éléments en bois, en carton, en plastique ou en caoutchouc) afin de représenter le socle géologique. Selon un mode de réalisation, au moins une paroi de la boîte de déformation est mobile, par exemple au moyen d'un piston (se déplaçant par exemple avec des vitesses de l'ordre du mm/h à la dizaine de cm/h) et d'un moteur, afin d'imposer des mouvements en compression, en extension ou en cisaillement, ou une combinaison de ces précédents mouvements sur l'ensemble des couches. La boîte de déformation peut être aussi appelée robot de déformation lorsque la boîte comporte plusieurs pistons pour imposer des mouvements 3D complexes aux couches du modèle analogique. Alternativement, la boîte de déformation peut ne pas avoir de paroi mobile. Dans ce cas, la déformation souhaitée peut être induite par le simple effet de la gravité, en penchant par exemple de quelques degrés la boîte de déformation. Le terme boîte de déformation est toutefois le terme connu par l'homme du métier même dans ce dernier cas sans paroi mobile. Une boîte de déformation a généralement des dimensions de l'ordre des quelques dizaines de cm (environ 40 cm) en largeur et jusqu'à 1,5 m de longueur (moteurs pour actionner les parois mobiles y compris).

Le procédé selon l'invention présuppose que l'on dispose d'informations géologiques et mécaniques relatives à chacune des couches géologiques de la formation, desquelles on déduit au moins un ordre de dépôt des couches géologiques, les épaisseurs des couches géologiques, un comportement mécanique des couches géologiques, et des conditions aux limites subies par la formation (ensemble des contraintes appliquées à la formation, pouvant être variables en direction et en intensité dans le temps). Ces informations peuvent notamment avoir été obtenues à partir de mesures sismiques. Par mesures sismiques, on entend des mesures réalisées au moyen d'un dispositif d'acquisition de mesures sismiques, comprenant de manière classique au moins une source sismique (par exemple un canon à eau en sismique marine, ou un camion vibrateur en sismique terrestre) pour générer des ondes sismiques dans la formation souterraine et une pluralité de récepteurs d'ondes sismiques (tels que des accéléromètres, des hydrophones) placés de manière à enregistrer au moins des ondes sismiques s'étant réfléchies sur des contrastes d'impédance (tels que des surfaces d'érosion, des limites d'unités stratigraphiques). De manière classique, le dispositif d'acquisition sismique est mobile de manière à couvrir une large zone (2D ou 3D) à la surface de la formation. Les mesures sismiques subissent ensuite un traitement sismique à l'issue duquel on obtient une image sismique. Cette image est alors interprétée automatiquement ou par des spécialistes pour déterminer la géométrie et les épaisseurs des différentes couches géologiques de la formation souterraine, ainsi que leur ordre de dépôt. La nature des couches peut également être inférée à partir des données sismiques, mais l'accès à la lithologie et donc au comportement mécanique des couches géologiques sont plus souvent obtenus au moyen de mesures diagraphiques et/ou d'analyses en laboratoire de carottes prélevées sur site. Par mesures diagraphiques, on entend des mesures réalisées dans au moins un puits foré dans la formation, au moyen d'un dispositif ou sonde diagraphique se déplaçant le long du puits pour mesurer une grandeur physique relative à la formation géologique proche du puits. Les conditions aux limites (c'est-à-dire les types de forces que l'on souhaite appliquer soit gravitaires soit tectoniques, les vitesses de compression, d'extension, ou de cisaillement, le relief de la base de la boîte, la forme des pistons mobiles, etc.) sont quant à elles obtenues par des études géologiques réalisées à l'échelle régionale par des géologues structuralistes. Les conditions aux limites peuvent être variables dans le temps, en direction et en intensité.

Le procédé selon l'invention comprend au moins les étapes suivantes :
1) Construction du modèle analogique à un temps initial
2) Acquisition d'une succession d'images tridimensionnelles simultanément à la déformation du modèle analogique
3) Détermination d'un champ de déplacement au moyen d'une méthode de flux optique

Selon une mise en œuvre de l'invention, le procédé peut comprendre une quatrième étape optionnelle, consistant en l'utilisation du champ de déplacement déterminé.

Les étapes du procédé selon l'invention sont détaillées ci-après pour une formation souterraine quelconque, pour laquelle on dispose d'informations géologiques et mécaniques relatives à chacune des couches géologiques de la formation, desquelles on déduit au moins un ordre de dépôt des couches géologiques, les épaisseurs des couches géologiques, un comportement mécanique des couches géologiques, et des conditions aux limites subies par la formation. Par ailleurs, préalablement à la mise en oeuvre des étapes du procédé selon l'invention, les épaisseurs des couches géologiques, les conditions aux limites ainsi que le comportement mécanique des couches géologiques ont été mises à l'échelle du modèle analogique, par toute technique bien connue par le spécialiste comme discuté ci-dessus. Autrement dit, préalablement à la mise en oeuvre des étapes du procédé selon l'invention, par une mise à l'échelle bien connue des spécialistes, on définit des épaisseurs des couches du modèle analogique qui sont représentatives des épaisseurs des couches géologiques, des conditions aux limites à appliquer au modèle analogique qui sont représentatives des conditions aux limites subies par la formation, et des matériaux des couches du modèle analogique qui sont représentatifs du comportement mécanique des couches géologiques. Selon une mise en oeuvre de l'invention, les conditions aux limites à appliquer au modèle analogique peuvent correspondre à des vitesses de déformation et/ou des formes de piston de la boite de déformation et/ou des reliefs variables de la base de la boite.

### 1) Construction du modèle analogique à un temps initial

Au cours de cette étape, il s'agit de construire un modèle analogique à un temps initial, au moyen d'une boite déformation.

Le temps initial peut correspondre au dépôt des couches géologiques d'une formation souterraine, autrement dit à un état des couches géologiques au moment de leur dépôt, sans qu'elles aient subi de déformations. Si le fond de la boîte de déformation est plan et horizontal, les couches du modèle analogiques sont également planes et horizontales. Le temps initial peut alternativement correspondre à un état de déformation de la formation souterraine, comprenant par exemple une faille.

Selon l'invention, la construction du modèle analogique est réalisée de la manière suivante : on superpose, dans la boîte de déformation, selon l'ordre de dépôt des couches géologiques et selon les épaisseurs des couches géologiques mises à l'échelle du modèle analogique, une succession de couches du modèle analogique formées dans un matériau représentatif du comportement mécanique de chacune des couches géologiques, au moins une des couches, de préférence chacune des couches, du modèle analogique comprenant une pluralité de marqueurs détectables par des rayons X.

Autrement dit, à l'issue de cette étape, on obtient un modèle analogique au temps initial se présentant comme un ensemble multi-couches, chaque couche du modèle analogique représentant une couche géologique de la formation, par ses propriétés mécaniques et son épaisseur. Selon l'invention, et à la différence des modèles analogiques selon l'art antérieur, au moins une des couches du modèle analogique comporte en plus des marqueurs détectables par des rayons X. Il est bien clair que les marqueurs sont disposés à l'intérieur (c'est-à-dire dans le volume) de la au moins une couche. Par détectables par des rayons X, on entend des marqueurs formés dans des matériaux qui sont visibles sur des images obtenues par rayons X, par contraste de densité avec les matériaux utilisés pour les couches du modèle analogique. Avantageusement, les marqueurs ont une taille (diamètre) supérieure à 15% de la résolution des images obtenues par rayons X.

Ainsi, il est bien clair pour un homme du métier que les marqueurs doivent être d'une densité différente du matériau hôte pour être visibles sur les images obtenues par rayons X. Avantageusement, la densité du matériau des marqueurs peut être différente de 20 à 80% (en plus ou en moins) de la densité du matériau représentatif du comportement mécanique de la couche géologique. Une telle gamme permet un contraste de densité suffisant par rapport au matériau de la couche du modèle analogique pour rendre les marqueurs détectables par des rayons X. Dans les matériaux ductiles, la gamme optimale de différences de densité peut se situer plutôt entre 30 et 50%. Avantageusement, la taille des marqueurs peut être adaptée pour ne pas induire de mouvements gravitaires des marqueurs dans le matériau hôte.

De préférence, le choix du matériau, la taille et/ou nombre de marqueurs par unité de volume peuvent être de préférence déterminés de manière à ce que le déplacement des marqueurs soit passif, c'est-à-dire sans induire un déplacement du matériau hôte (c'est-à-dire du matériau de la couche du modèle analogique à l'intérieur de laquelle les marqueurs sont disposés) ou modifier le type de déformation attendu dans la couche hôte (c'est-à-dire dans la couche du modèle analogique à l'intérieur de laquelle les marqueurs sont disposés) ; par exemple, les marqueurs ne doivent pas créer une augmentation de la densité de fracturation par rapport à un modèle équivalent qui ne présenterait pas de marqueur dans ses couches.

Selon une mise en œuvre de l'invention, le nombre de marqueurs introduit dans une couche du modèle analogique peut représenter entre 1% et 5% de la masse de la couche. Une telle densité de marqueurs est suffisante pour obtenir, à l'issue du procédé, un champ de déplacement dont la résolution est inférieure à l'épaisseur de la couche, tout en permettant d'éviter que les marqueurs ne se touchent entre eux et que leur introduction modifie le comportement mécanique du matériau hôte.

Selon une mise en œuvre de l'invention, si la couche géologique a un comportement mécanique ductile, on peut utiliser, pour la couche correspondante dans le modèle analogique, de la silicone (ou PDMS, pour polydiméthylsiloxane) comme matériau représentatif du comportement mécanique de la couche géologique. Il s'agit d'un matériau classiquement utilisé dans le domaine pour les couches ductiles de la croûte supérieure.

Selon une mise en œuvre de l'invention, si la couche géologique a un comportement mécanique fragile, on peut utiliser, pour la couche correspondante dans le modèle analogique, du sable (sec), de la poudre de verre ou des microbilles de verre (de granulométrie comprise entre 100 et 200 µm) comme matériau représentatif du comportement mécanique de la couche géologique.

Selon une mise en œuvre de l'invention, si le matériau utilisé pour une couche du modèle analogique est du sable sec ou tout autre matériau granulaire de densité équivalente, on peut utiliser des marqueurs formés par des particules arrondies de verre expansé, par exemple de taille comprise entre 500 µm et 1000µm. On peut par exemple utiliser les particules de verre expansées commercialisées sous le nom de Poraver^{™} de la société allemande Dennert Poraver. Les marqueurs apparaissent ainsi plus foncés aux rayons X que le sable car leur densité (environ 0.5 g/cm³) est moins importante que celle du sable (environ 1.5 g/cm³). Ils absorbent donc moins les rayons X que le sable. Alternativement, si le matériau utilisé pour une couche du modèle analogique est du sable sec ou tout autre matériau granulaire de densité équivalente, on peut utiliser des granulats de pneu broyé de granulométrie comprise entre 0.7 et 1.5 mm.

Selon une mise en œuvre de l'invention, si le matériau utilisé pour une couche du modèle analogique est de la silicone, on peut utiliser des marqueurs formés par des particules de verre expansé enrobées d'iodure de potassium. Ces marqueurs apparaissent plus clairs que la silicone grâce à l'iode qui est un fort absorbant des rayons X. Ces marqueurs peuvent par exemple être formés par des particules arrondies, de taille comprise entre 500 µm et 700 µm. Alternativement, si le matériau utilisé pour une couche du modèle analogique est de la silicone, on peut utiliser des zéolithes dont la granulométrie varie entre 150 µm et 400 µm. Leur forte densité entre 1.3 et 1.9 g/cm³ nécessite l'utilisation de granulométrie plus faible que pour les marqueurs précédemment cités, pour éviter des déplacements gravitaires supérieurs aux déplacements du matériau hôte.

Selon une mise en œuvre de l'invention, pour chacune des couches du modèle analogique, si la couche géologique correspondante a un comportement mécanique ductile, on peut mélanger au préalable le matériau représentatif du comportement ductile de la couche géologique à la pluralité de marqueurs, et on peut déposer le matériau dans la boite de déformation. En effet, dans le cas d'un matériau ductile tel que de la silicone, il a été observé que cette préparation en amont permet d'avoir une répartition plus homogène des marqueurs dans le matériau ductile. Avantageusement, après le dépôt d'une couche d'un matériau représentatif d'un comportement ductile dans la boite de déformation, on peut laisser reposer le modèle analogique ainsi partiellement construit entre 4 et 7 jours, avant de superposer une autre couche du modèle analogique. Cela permet d'éliminer les bulles d'air qui peuvent être piégées dans la couche ductile lors du mélange avec les marqueurs.

Selon une mise en œuvre de l'invention, pour chacune des couches du modèle analogique, si la couche géologique correspondante a un comportement mécanique fragile, on peut verser le matériau représentatif du comportement fragile de la couche géologique dans la boite de déformation, et on peut insérer, au fur et à mesure du versement du matériau, la pluralité de marqueurs. Cela permet d'avoir une répartition plus homogène des marqueurs dans le matériau représentatif du comportement fragile (par exemple du sable), qu'avec un mélange préalable des marqueurs avec le matériau représentatif du comportement fragile.

Ainsi, à l'issue de cette étape, on obtient un modèle analogique représentatif de la formation souterraine à un temps initial, pouvant par exemple correspondre au dépôt des couches géologiques de la formation ou correspondant à un état de déformation de la formation souterraine. Au moins une des couches du modèle analogique comporte des marqueurs.

### 2) Acquisition d'une succession d'images tridimensionnelles simultanément à la déformation du modèle analogique

Au cours de cette étape, au moyen de la boite de déformation, on applique, au modèle analogique issu de l'étape 1, les conditions aux limites mises à l'échelle du modèle analogique, et on acquière simultanément une succession d'images tridimensionnelle entre le temps initial et un temps final pour une succession de pas de temps, au moyen d'une imagerie par rayons X. Selon une mise en œuvre de l'invention, l'imagerie par rayons X peut être réalisée au moyen d'un scanner à rayons X couplé à une tomographie.

Autrement dit, au cours de cette étape, on déforme le modèle analogique au cours du temps au moyen de la boite de déformation selon des conditions aux limites prédéfinies, et on acquière une pluralité d'images tridimensionnelles (une image tridimensionnelle pouvant éventuellement résulter d'une concaténation d'images bidimensionnelles), au moyen d'une imagerie à rayons X du modèle analogique, simultanément à sa déformation.

Selon une mise en œuvre de l'invention, on peut appliquer les conditions aux limites mises à l'échelle du modèle analogique au moyen de moteurs de la boite de déformation, actionnant des pistons permettant la mobilité d'au moins une paroi de la boite de déformation. Les moteurs peuvent par exemple induire des vitesses de compression, par exemple variant entre 0.1 mm/h et 1 m/h.

Selon une mise en œuvre de l'invention, on peut utiliser un scanner à rayons X de type médical. On peut alors placer la boite de déformation sur le lit du scanner.

Selon une mise en oeuvre de l'invention, la fréquence d'acquisition du scanner à rayons X peut être comprise entre 1 et 30 minutes selon la taille du modèle à acquérir et la vitesse de déformation appliquée. La fréquence d'acquisition doit être suffisante pour permettre une compréhension de la déformation d'un modèle analogique dans le temps.

Selon une mise en oeuvre de l'invention, on réalise l'imagerie par rayons X au moyen d'un scanner à rayons X couplé à une tomographie. De manière générale, ces techniques exploitent l'absorption différentielle des rayons X en fonction de la densité de matière. De manière classique, le scanner à rayons X permet d'obtenir une pluralité de vues 2D réalisées suivant différents angles par rotation soit de l'objet soit du dispositif d'acquisition lui-même. Les différentes vues permettent de déterminer l'absorption de chaque élément de volume appelé « voxels » et la tomographie permet de reconstruire l'objet en trois dimensions. On obtient alors une représentation du volume de l'objet ou autrement dit une image tridimensionnelle (qui peut être obtenue par concaténation d'images bidimensionnelles) que l'on peut visualiser par exemple sous la forme de coupes 2D selon des directions quelconques.

Selon l'invention, on répète l'acquisition d'images tridimensionnelles par imagerie par rayons X pour une succession de pas de temps entre un temps initial et un temps final. On obtient donc une image tridimensionnelle du modèle analogique pour chaque pas de temps, ou autrement dit, on obtient un volume 4D du modèle analogique, où la quatrième dimension est le temps.

### 3) Détermination d'un champ de déplacement au moyen d'une méthode de flux optique

Au cours de cette étape, pour chaque couple d'images tridimensionnelles consécutives dans la succession d'images tridimensionnelles, on applique au moins une méthode de flux optique au couple d'images tridimensionnelles consécutives considéré et on détermine un champ de déplacement pour chacun des couples des images tridimensionnelles.

Autrement dit, pour deux images tridimensionnelles consécutives dans le temps, on détermine un champ de déplacement, c'est-à-dire un vecteur de déplacement en tout point (c'est-à-dire des voxels) de l'une des deux images d'un couple d'images tridimensionnelles (en effet, on peut associer indifféremment le vecteur déplacement soit à la première composante, soit à la deuxième composante du couple d'images tridimensionnelles), au moyen au moins d'une méthode de flux optique appliquée entre deux images tridimensionnelles consécutives. Une image tridimensionnelle représentant le modèle analogique à un pas de temps donné, cela permet une quantification des déplacements dans un modèle analogique représentant l'évolution de la déformation d'une formation souterraine au cours des temps géologiques.

Selon une mise en œuvre de l'invention, pour chaque couple d'images tridimensionnelles consécutives dans la succession d'images tridimensionnelles, on peut appliquer au moins une méthode de flux optique au couple d'images tridimensionnelles consécutives considéré et on peut déterminer un champ de déplacement pour la deuxième composante de chacun des couples des images tridimensionnelles. Autrement dit, pour cette mise en œuvre, pour deux images tridimensionnelles consécutives dans le temps, on détermine un vecteur de déplacement en tout point de l'image correspondant au temps le plus grand (deuxième composante) des deux images d'un couple d'images tridimensionnelles, au moyen au moins d'une méthode de flux optique appliquée entre deux images tridimensionnelles consécutives.

De manière générale, le flux optique est une méthode (automatique) de vision par ordinateur (« Computer Vision ») qui cherche à estimer le mouvement apparent de caractéristiques (en général la luminosité) entre deux images consécutives d'une séquence vidéo (c'est-à-dire une séquence ordonnée d'images dans le temps). On trouve des applications des méthodes de flux optique pour la détection de mouvement, la segmentation d'objets et la mesure de la disparité stéréoscopique. Les méthodes de flux optiques sont variées, et comprennent les méthodes différentielles, les méthodes fréquentielles, les méthodes qui s'appuient sur la corrélation d'image, et toutes les méthodes hybrides qui mixent plusieurs méthodes de déplacement.

Selon une mise en œuvre de l'invention, on peut utiliser une méthode de flux optique de la famille des méthodes différentielles d'estimation du flux optique (« Differential methods of estimating optical flow » en anglais). Ces méthodes estiment la vitesse et donc les déplacements par l'emploi de dérivées partielles spatio-temporelles des intensités de l'image. En effet, l'hypothèse initiale qui sous-tend ces méthodes est que l'intensité des pixels liés à une structure et donc une région particulière de l'image est approximativement constante au cours du mouvement, du moins sur une échelle de temps très courte. Autrement dit, si on note *I*(*x*, *t*) une fonction représentant l'intensité lumineuse *I* en tout point x de l'image à l'instant t, on suppose que : $I \left(x, t\right) \approx I \left(x+δx,t+δt\right)$ où *δx* est le déplacement local d'une région de l'image au point x après un temps *δt*.

Parmi les méthodes différentielles, le domaine de l'image est de plus considéré comme continu (et différentiable) dans le temps et l'espace. Selon une mise en œuvre de l'invention, on peut utiliser une méthode de flux optique de la famille des méthodes différentielles globale, telle que l'une des méthodes décrites dans les documents (Horn and Shunk, 1981 ; Farnebäck, 2003) pour une estimation dense des déplacements (c'est-à-dire en tout point de l'image). Alternativement, on peut utiliser une méthode de flux optique de la famille des méthodes différentielles locales, telle que la méthode décrite dans le document (Lukas et Kanade, 1981) pour une estimation locale (en quelques points prédéfinis de l'image) des déplacements.

De manière générale, les méthodes de flux optique de la famille des méthodes différentielles globales définissent un terme d'énergie, sous la forme d'une fonction quadratique de la différence de variation des intensités lumineuses Δ*I*(*x, t*) = *I*(*x + δx, t + δt*) *- I*(*x, t*) (en quelle que sorte une somme des erreurs quadratiques), auquel s'ajoute un terme de régularisation, intégré sur tout le domaine de l'image. Étant donné la nature différentiable de la fonction quadratique d'erreur et/ou du type de régularisation, on obtient classiquement en traitement d'image un système d'équation aux dérivées partielles par application des équations d'Euler-Lagrange. La solution de ce système fournit en chaque point de l'image un champ de déplacement qui minimise l'énergie intégrale définie sur l'ensemble du domaine de l'image.

La méthode de flux optique de la famille des méthodes différentielles globale décrite dans le document (Horn et Shunk 1981) construit le terme d'énergie du système en approchant la variation Δ*I*(*x, t*) par un développement limité à l'ordre 1. Ceci ne permet pas de traduire les variations locales des champs de déplacement. La méthode de flux optique de la famille des méthodes différentielles globale décrite dans le document (Farnebäck, 2003) construit au préalable une approximation polynomiale locale de l'intensité *I*(*x, t*). Comme cette approximation est locale, elle introduit une notion de localisation dans la sommation intégrale de l'énergie. Cette méthode fournit donc une estimation dense globale (en chaque point de l'image) de champ de déplacement en introduisant des disparités locales.

A l'opposé des méthodes globales, les méthodes de flux optique de la famille des méthodes différentielles locales, comme celle décrite dans le document (Lucas et Kanade, 1981), font l'hypothèse de champ de vitesses localisé autour d'un point de l'image. Ces méthodes définissent une énergie en une série de points prédéfinis, les intègrent localement en une fonction de coût sur tout leur voisinage et cherchent le déplacement en chaque point qui minimise le coût défini sur le voisinage. Une méthode de flux optique de la famille des méthodes différentielles locale nécessite de sélectionner les points des images pour lesquels un suivi dans le temps est réalisé. Selon une mise en œuvre de l'invention, on peut utiliser une méthode de détection de coins (« corners » en anglais), telle que la méthode décrite dans le document (Shi et Tomasi,1994), pour sélectionner les points des images tridimensionnelles sur lesquels la méthode de flux optique de la famille des méthodes différentielles locale est appliquée. Les coins sont des endroits de l'image où un léger déplacement sur l'image dans une direction induit une forte variation des intensités lumineuses (c'est-à-dire un fort contraste entre des pixels adjacents). La détection d'un coin peut être mise en œuvre de la manière suivante : dans une fenêtre autour d'un point, on définit un score R construit sur la matrice d'autocorrélation des intensités des pixels dans cette fenêtre. Si le score R est supérieur à un seuil, le point est considéré comme un coin et est éligible pour le calcul d'un déplacement par une méthode de flux optique locale.

En principe, le flux optique est calculé à une seule résolution, généralement celle définie par la résolution de l'image. Toutefois, il peut être difficile de capturer les mouvements à grande échelle sur l'image, que ce soit avec une méthode de flux optique globale et encore moins avec une méthode de flux optique locale. Avantageusement, on peut appliquer une méthode de flux optique de la famille des méthodes différentielles globale ou locale au moyen d'une mise en œuvre hiérarchique, dite aussi pyramidale. Une telle approche va d'abord estimer les déplacements sur une image grossière et augmenter progressivement la résolution. Cette approche hiérarchique permet de décomposer les images à différentes échelles sous la forme d'une pyramide gaussienne ou laplacienne. La représentation basse fréquence de l'image à une résolution grossière permet d'estimer un déplacement à grande échelle, qui peut ensuite être affiné au fur et à mesure que le flux optique est appliqué sur les résolutions plus fines.

De manière générale, les méthodes de flux optique ont besoin d'éléments ou d'assemblages de pixels qui présentent un contraste suffisant sur les images. L'ajout de marqueurs à l'intérieur des couches du modèle analogique selon l'invention permet de rendre hétérogène l'intérieur des couches (qui sont homogènes dans les modèles analogiques selon l'art antérieur), ce qui permet d'augmenter l'information pouvant être prise en compte par les méthodes de flux optique. Ainsi, ce changement de texture de l'intérieur des couches rend l'estimation des champs de déplacements plus précise, et à des endroits qui sont habituellement «invisibles» sans la présence de marqueurs.

Que ce soit par des méthodes globales ou locales, les mises en œuvre pyramidales telles que décrites ci-dessous utilisent avantageusement l'augmentation de contraste induite sur les images par la présence des marqueurs. Ceux-ci permettent un meilleur paramétrage des méthodes de flux optique pour d'une part localiser les coins et d'autre part estimer des déplacements.

Selon une mise en œuvre de l'invention, lorsque la méthode de flux optique locale utilisée ne permet pas d'obtenir un vecteur de déplacement en tout point d'une image tridimensionnelle, on peut réaliser une interpolation (dense) des vecteurs de déplacement déterminés en des points d'une image tridimensionnelle par une méthode de flux optique, afin d'obtenir un champ de déplacement dans tout le volume d'une image tridimensionnelle. Une telle interpolation repose sur une hypothèse de continuité du champ de déplacement.

Ainsi, à l'issue de cette étape, on obtient un champ de déplacement pour chaque couple d'images tridimensionnelles consécutives. Autrement dit, à l'issue de cette étape, on obtient les déplacements spatio-temporels à l'intérieur du modèle analogique. Les marqueurs disposés à l'intérieur des couches du modèle analogique permettent d'augmenter l'information pouvant être prise en compte par les méthodes de flux optique, et donc la précision et la densité de l'information en sortie de ces méthodes.

### 4) Utilisation du champ de déplacement

Selon le mode de réalisation principal de l'invention, à partir au moins du champ de déplacement déterminé pour chacun des couples d'images tridimensionnelles, on peut construire un modèle géologique numérique de ladite formation, puis réaliser au moins une simulation géomécanique et/ou une simulation d'écoulement dans ladite formation au moyen dudit modèle géologique numérique, et à partir au moins des résultats de ladite au moins une simulation, on peut forer au moins un puits dans ladite formation pour exploiter une ressource de ladite formation ou pour stocker un fluide ou un solide dans ladite formation.

Selon une mise en oeuvre de l'invention, la ressource exploitée peut être des hydrocarbures, ou le gradient géothermique. Selon une mise en oeuvre de l'invention, le fluide stocké peut être de l'hydrogène, du CO₂, du méthane. Selon une mise en oeuvre de l'invention, le solide stocké peut être des déchets, comme des déchets radioactifs.

De manière générale, l'obtention des champs de déplacement dans des modèles analogiques améliore la compréhension des systèmes géologiques structuraux. Ainsi, la détermination de l'évolution dans le temps d'un champ de déplacement associé à un modèle analogique représentatif d'une formation souterraine peut avoir de nombreuses applications.

De manière non limitative, un tel champ de déplacement peut être utile pour localiser et caractériser la déformation dans les couches fragiles (avant que les discontinuités telles que les failles soient visibles) mais également dans les couches ductiles (où les zones de cisaillement ne sont pas visibles actuellement). Plus précisément, ces informations de concentration de déformation sont notamment utiles pour localiser et caractériser les zones les plus déformées ou les moins déformées dans les couches de la formation, notamment les couches à exploiter. En effet, des zones très déformées peuvent être différentes que dans le reste de la couche à exploiter, ce qui indique que la porosité et la perméabilité peuvent être plus fortes que dans le reste du réservoir. Dans des couches ductiles analogues de couches salifères (dépôt d'évaporites), par exemple connaître les zones de faible ou forte déformation donne des indications sur l'emplacement à choisir, la pérennité et l'extension spatiale envisageable pour de potentielles cavités salines dans le cadre de problématiques de stockage.

Les champs de déplacement peuvent également servir à définir des lois de comportement mécanique de milieux, mélangeant des comportements fragiles et ductiles, analogues aux couches géologiques, qui peuvent être implémentées dans des modèles numériques. Avoir les champs de déplacement permet aussi de quantifier plus finement la répartition du déplacement le long des failles.

Ainsi, l'obtention des champs de déplacement dans des modèles analogiques peut permettre de contribuer à construire des modèles géologiques numériques de la formation souterraine étudiée. Il s'agit d'une sorte de maquette du sous-sol construite dans le but de décrire aussi précisément que possible la structure et/ou les propriétés pétrophysiques (porosité, perméabilité) et/ou les propriétés mécaniques et/ou les propriétés des fluides de la formation souterraine étudiée. Cette maquette est représentée sur un ordinateur sous la forme d'une représentation maillée, chacune des mailles comportant une ou plusieurs valeurs de propriétés. Le spécialiste a pleine connaissance de méthodes pour construire une telle représentation maillée d'une formation souterraine.

Puis à partir de ce modèle géologique numérique, on peut réaliser au moins une simulation géomécanique et/ou une simulation d'écoulement dans ladite formation. Il s'agit de techniques bien connues du spécialiste.

La simulation géomécanique consiste à simuler de manière numérique le comportement géomécanique d'une formation souterraine au cours des temps géologiques. Une simulation géomécanique utilise classiquement des historiques de pression, de température et de saturation, des quantités de sédiments déposés ou érodés, d'éventuelles contraintes tectoniques, ainsi que des lois de comportement associées aux différentes lithologies du domaine modélisé. Un exemple d'un tel simulateur géomécanique est le logiciel ABAQUS^{™} (Dassault Systèmes, France).

La simulation d'écoulement consiste à simuler de manière numérique les écoulements dans une formation souterraine. Une simulation d'écoulement résout l'ensemble des équations d'écoulement propres à chaque maille d'un modèle géologique numérique d'une formation et délivre des informations comme les saturations, pressions, concentrations, température au cours du temps de la simulation et dans chacune des mailles du modèle géologique numérique. Un exemple de simulateur d'écoulement (aussi appelé simulateur de réservoir) est le logiciel PumaFlow^{®} (IFP Energies nouvelles, France).

A partir des résultats la simulation de réservoir et/ou de la simulation géomécanique, on peut forer au moins un puits dans ladite formation pour exploiter une ressource de ladite formation ou pour stocker un fluide ou un solide dans cette formation.

Selon une mise en œuvre de l'invention, le résultat d'une simulation géomécanique peut renseigner sur l'état des contraintes dans une formation souterraine au temps actuel ou sur la potentielle réactivation de fractures ou de failles présentes dans la formation et représentées dans le modèle géologique. A partir de cet état des contraintes, on peut déterminer au moins un emplacement d'au moins un forage à réaliser dans la formation.

Selon une mise en œuvre de l'invention selon laquelle la ressource à exploiter est de nature géothermique ou pétrolière, le résultat d'une simulation d'écoulement peut permettre de déterminer un schéma d'exploitation de la ressource de la formation souterraine étudiée. De manière générale, un schéma d'exploitation comprend un nombre, une géométrie et une implantation, position et espacement, des puits injecteurs et/ou producteurs à forer dans la formation souterraine étudiée et à équiper. Selon un mode de mise en œuvre de l'invention, on peut définir différents schémas d'exploitation de la ressource contenu dans la formation souterraine étudiée et on estime, à l'aide du simulateur d'écoulement, au moins un critère permettant d'évaluer la qualité de ces schémas d'exploitation.

Selon un mode de mise en œuvre dans le domaine pétrolier et/ou gazier, le critère d'évaluation peut être la quantité d'hydrocarbures produits selon chacun des différents schémas d'exploitation, la courbe représentative de l'évolution de la production dans le temps au niveau de chacun des puits, le rapport huile sur gaz (GOR), etc. Le schéma selon lequel les hydrocarbures contenus dans la formation souterraine sont réellement exploités peut alors correspondre à celui satisfaisant au moins un des critères d'évaluation des différents schémas d'exploitation. Selon une mise en œuvre de l'invention, on réalise une pluralité de simulations d'écoulement pour une pluralité d'implantations de puits injecteurs-producteurs, au moyen du simulateur selon l'invention, et on sélectionne l'implantation satisfaisant au moins un des critères d'évaluation prédéfinis. Avantageusement, on peut en outre réaliser une pluralité de simulations d'écoulement pour une pluralité de type de récupération assistée, au moyen du simulateur selon l'invention en chacune des cellules de la représentation maillée, et on détermine le schéma d'exploitation selon lequel exploiter les hydrocarbures pour chacune des types de récupération assistée, et on sélectionne la récupération assistée satisfaisant au moins un des critères d'évaluation prédéfinis. Puis, une fois le schéma d'exploitation déterminé, les hydrocarbures piégés dans la formation souterraine sont exploités en fonction de ce schéma d'exploitation, notamment au moins en forant les puits injecteurs et producteurs du schéma d'exploitation ainsi déterminés, et en installant les infrastructures nécessaires à l'exploitation de la ressource. Dans le cas où le schéma d'exploitation a en outre été déterminé en estimant la production du réservoir associée à différents types de récupération assisté, on injecte dans le puits injecteur le ou les types d'additifs (polymère, tensio-actifs, mousse de CO2) sélectionné tel que décrit ci-dessus.

Selon un mode de mise en œuvre selon lequel la ressource à exploiter est de nature géothermique, le critère d'évaluation peut être l'énergie ou la température du fluide produit selon chacun des différents schémas d'exploitation, la quantité de fluide produit selon chacun des différents schémas d'exploitation, etc. Avantageusement, le critère d'évaluation peut également comprendre la quantité de lithium que l'on peut extraire du fluide produit. Le schéma selon lequel le fluide est exploité à des fins géothermiques peut alors correspondre à celui satisfaisant au moins un des critères d'évaluation des différents schémas d'exploitation. Selon un mode de réalisation de l'invention, on peut réaliser une pluralité de simulations d'écoulement pour une pluralité d'implantations de puits injecteurs-producteurs, au moyen d'un simulateur d'écoulement, et on sélectionne le schéma d'exploitation satisfaisant au moins un des critères d'évaluation prédéfinis. Une fois le schéma d'exploitation déterminé, on peut forer les puits injecteurs et producteurs du schéma d'exploitation ainsi déterminés, et on peut installer les infrastructures nécessaires à l'exploitation de la ressource.

### Exemples

Les caractéristiques et avantages du procédé selon l'invention apparaitront plus clairement à la lecture de l'exemple d'application ci-après.

Dans cet exemple, le procédé selon l'invention est mis en œuvre dans le cas d'un modèle analogique représentant une formation souterraine ayant subi des déformations géologiques en contexte compressif (dans lequel on assiste à un raccourcissement dans une direction préférentielle).

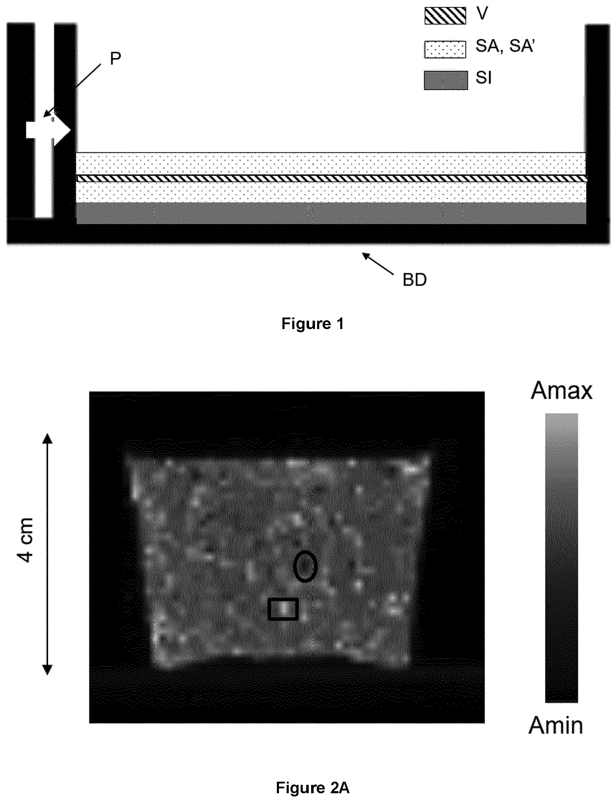

La figure 1 illustre de manière schématique le modèle analogique construit dans une boite de déformation. La boite de déformation BD utilisée mesure 39cm de long et 80 cm de large, et comporte un piston amovible P (dans la longueur) de la boite de déformation, qui permet de comprimer l'ensemble des couches avec des vitesses variant entre 0.5cm/h et 2cm/h. Dans cette boîte de déformation BD, on dépose successivement une couche ductile de silicone SI d'une épaisseur de 11 mm, puis une couche fragile de sable SA d'une épaisseur de 16 mm, suivie d'une couche fragile de particules de verre V d'une épaisseur de 2mm, et enfin une couche fragile de sable SA'. L'ensemble de ces trois dernières couches se comporte de manière fragile.

Les figures 2A, 2B, 3A, 3B, 4A, 4B, 5A et 5B décrites ci-après sont présentées à titre purement illustratif d'un exemple d'application du procédé selon l'invention.

Pour pouvoir suivre le déplacement dans les différentes couches, des marqueurs sont ajoutés dans les couches de sable SA, SA' et dans la couche de silicone SI.

Dans la silicone, les marqueurs utilisés correspondent à des petites particules de verre expansé enrobées d'iodure de potassium.

La figure 2A présente une image prise au scanner à rayons X (on observe donc les variations d'absorption mesurée entre une absorbance minimale Amin et une absorbance maximale Amax) d'une couche de silicone dans laquelle sont répartis de tels marqueurs, dont un exemple est entouré par un rectangle noir. On peut observer sur cette figure que les marqueurs apparaissent plus clairs que la silicone à cause de l'iode qui est un fort absorbant des rayons X. On peut également observer sur la figure 2A des points noirs (dont l'un est entouré par une ellipse noire) qui correspondent à des bulles d'air. Ces bulles d'air ne peuvent pas être considérées comme des marqueurs, car leur faible densité fait qu'elles remontent dans la silicone sous l'effet de la gravité et qu'elles ne suivent pas passivement les déformations de la silicone.

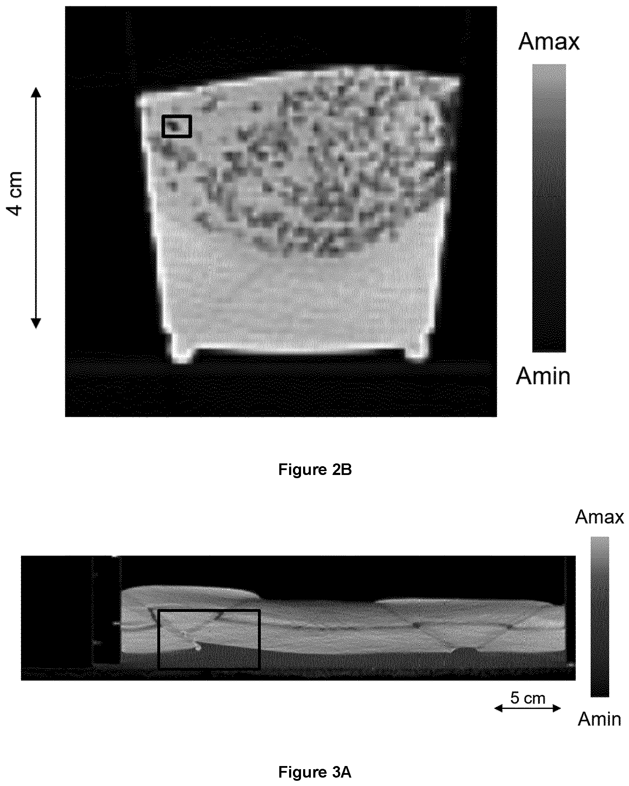

Dans le sable, les marqueurs utilisés sont des petites particules arrondies de verre expansé de taille comprise entre 700 µm et 1000 µm, de la société Dennert Poraver. La figure 2B présente une image prise au scanner à rayons X représentant de tels marqueurs répartis dans la partie supérieure d'une couche du sable utilisé pour cet exemple, un exemple de marqueur étant entouré par un rectangle noir sur cette figure. On peut observer que les marqueurs apparaissent plus foncés que le sable car leur densité (environ 0.5 g/cm³) est moins importante que celle du sable (environ 1.2 g/cm³). Ils absorbent donc moins les rayons X que le sable.

Les marqueurs ont été ajoutés dans la silicone avant de préparer les différentes couches en mélangeant les particules et la silicone de façon à avoir une répartition homogène des particules dans la silicone. La densité de particules choisie permet d'avoir visuellement une bonne répartition des marqueurs. Celle-ci doit être assez dense, mais, pour autant, les marqueurs ne doivent pas se toucher. Les couches de silicone sont ensuite préparées en utilisant directement cette silicone chargée en marqueurs. Les couches sont ensuite mises au repos entre 4 et 7 jours de manière à éliminer le maximum de bulles d'air, piégées lors du mélange des couches. Les marqueurs rajoutés dans le sable sont incorporés dans le sable au moment du dépôt de la couche de sable en versant simultanément le sable et les marqueurs au-dessus de la boîte de déformation.

Une fois que le modèle est construit selon la stratigraphie définie dans la Figure 1, la boîte de déformation est placée sur le lit d'un scanner médical. Les moteurs entraînant le piston P sont lancés à des vitesses de compression variant entre 0.5cm/h et 2cm/h, et des acquisitions de séries de coupes 2D au travers du modèle sont réalisées toutes les 5 minutes sans interruption de la déformation. Une méthode de tomographie permet ensuite de reconstruire une image tridimensionnelle pour chaque pas de temps. On obtient alors un film de la déformation du modèle analogique.

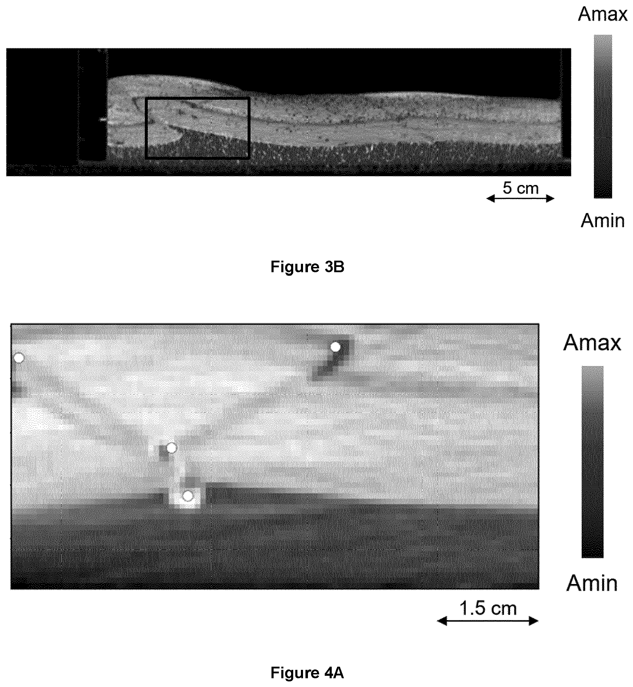

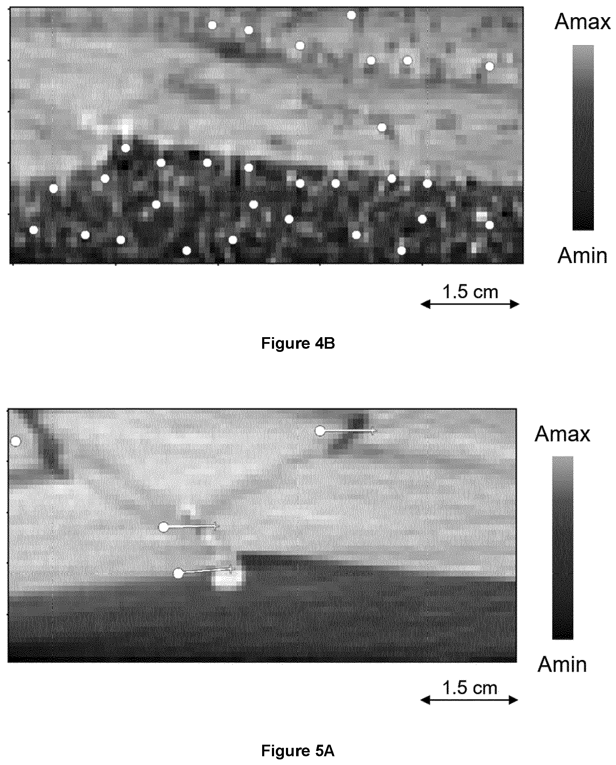

La Figure 3B illustre une coupe 2D dans une image tridimensionnelle obtenue à l'issue de l'étape b) du procédé selon l'invention, à un pas de temps t de la déformation du modèle analogique, déformation induite par la boite de déformation et les conditions aux limites appliquées. A des fins de comparaison, la figure 3A présente une image tridimensionnelle prise au même pas de temps dans un modèle analogique ayant les mêmes caractéristiques de couches que celui de la figure 3B et ayant été soumis aux mêmes conditions aux limites, à l'exception du fait que les couches de ce modèle analogique ne contiennent pas de marqueurs. On remarque sur la Figure 3B que dans la couche de silicone (couche foncée à la base du modèle analogique), les marqueurs sont toujours bien distribués dans la couche, ce qui indique que leur densité est suffisamment proche de celle de la silicone (d=0.97g/cm³) pour ne pas avoir coulé ou au contraire remonté à la surface pendant les 4 à 7 jours de repos, et pendant la phase de déformation. Les rectangles noirs présentés sur les images 3A et 3B délimitent la région des modèles analogiques respectivement sans et avec marqueurs ainsi présentés qui fait l'objet des figures 4A et 4B décrites ci-après.

Une méthode de flux optique est ensuite appliquée à chaque couple d'images tridimensionnelles consécutives. Plus précisément, pour cet exemple d'application, la méthode de flux optique locale décrite dans le document (Lucas & Kanade, 1981) a été appliquée, après application de la méthode décrite dans (Shi et Tomasi, 1994) pour une sélection automatique des points qui vont être suivis par la méthode de flux optique.

La Figure 4A et la figure 4B correspondent à des agrandissements des coupes 2D au pas de temps t présentées sur les figures 3A et 3B, délimités par les rectangles noirs présentés sur les figures 3A et 3B respectivement. Les points blancs sur ces images représentent les points de ces deux coupes qui ont été sélectionnés de manière automatique par la méthode de (Shi et Tomasi, 1994). On peut observer que la coupe pour laquelle le modèle analogique comporte des marqueurs (c'est-à-dire la coupe de la figure 4B) présentent plus de points destinés à être suivis par la méthode de flux optique. Cela est dû à la présence de marqueurs dans les couches.

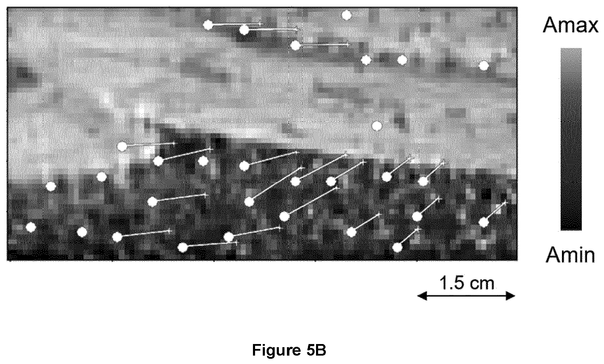

La figure 5A et la figure 5B présentent les mêmes coupes 2D dans l'espace, mais prises dans des images tridimensionnelles du modèle analogique à un pas de temps t+1, obtenues respectivement dans un cas où les couches du modèle analogique ne comportent pas de marqueurs et dans un cas où les couches du modèle analogique comportent des marqueurs. Les traits blancs représentent la direction et l'intensité relative des vecteurs de déplacement déterminés en chaque point destiné à être suivi par la méthode de flux optique et présentés en figure 4A et 4B. On peut observer une densité plus importante des vecteurs de déplacement obtenus par la mise en œuvre du procédé selon l'art antérieur. Le champ de déformation est donc clairement mieux estimé par l'introduction de marqueurs.

## Revendications

1. Procédé pour quantifier les déplacements dans un modèle analogique représentant l'évolution de la déformation d'une formation souterraine au cours des temps géologiques, à partir d'informations géologiques et mécaniques relatives à chacune des couches géologiques de ladite formation desquelles on déduit au moins un ordre de dépôt desdites couches géologiques, des épaisseurs desdites couches géologiques, un comportement mécanique desdites couches géologiques, et des conditions aux limites subies par ladite formation, au moyen d'une boite de déformation pour construire un modèle analogique de ladite formation, ladite boite de déformation pouvant ou non comporter au moins une paroi mobile, une étape de mise à l'échelle étant préalablement appliquée dans laquelle on définit des épaisseurs des couches dudit modèle analogique représentatives desdites épaisseurs desdites couches géologiques, des conditions aux limites à l'échelle dudit modèle analogique représentatives desdites conditions aux limites subies par ladite formation, et des matériaux des couches dudit modèle analogique représentatifs dudit comportement mécanique desdites couches géologiques, ledit procédé étant **caractérisé en ce qu'**on applique au moins les étapes suivantes :
A) on construit ledit modèle analogique à un temps initial de la manière suivante : on superpose, dans ladite boite de déformation, selon ledit ordre de dépôt et selon lesdites épaisseurs desdites couches dudit modèle analogique, une succession de couches dudit modèle analogique formées dans lesdits matériaux desdites couches dudit modèle analogique, au moins une desdites couches dudit modèle analogique comprenant une pluralité de marqueurs détectables par des rayons X, lesdits marqueurs étant disposés à l'intérieur de ladite au moins une couche dudit modèle analogique ;
B) au moyen de ladite boite de déformation, on applique lesdites conditions aux limites à l'échelle dudit modèle analogique audit modèle analogique audit temps initial ainsi construit, et on acquière simultanément une succession d'images tridimensionnelles entre ledit temps initial et un temps final pour une succession de pas de temps, au moyen d'une imagerie à rayons X, de préférence au moyen d'un scanner à rayons X couplé à une tomographie ;
C) Pour chaque couple d'images tridimensionnelles consécutives dans ladite succession, on applique une méthode de flux optique, on détermine un champ de déplacement pour chacun desdits couples desdites images tridimensionnelles, et on obtient des déplacements spatio-temporels à l'intérieur dudit modèle analogique.

2. Procédé selon la revendication 1, dans lequel, pour chacune desdites couches dudit modèle analogique, si ladite couche géologique correspondante a un comportement mécanique ductile, on mélange au préalable ledit matériau de ladite couche dudit modèle analogique à ladite pluralité de marqueurs, et on dépose ledit matériau dans ladite boite de déformation.

3. Procédé selon l'une des revendications précédentes, dans lequel, pour chacune desdites couches dudit modèle analogique, si ladite couche géologique correspondante a un comportement mécanique fragile, on verse ledit matériau de ladite couche dudit modèle analogique dans ladite boite de déformation, et on insère, au fur et à mesure dudit versement dudit matériau, ladite pluralité de marqueurs.

4. Procédé selon l'une des revendications précédentes, dans lequel, pour chacune desdites couches dudit modèle analogique, si ladite couche géologique correspondante a un comportement mécanique fragile, on utilise du sable, de la poudre de verre ou des microbilles de verre comme matériau de ladite couche dudit modèle analogique.

5. Procédé selon la revendication 4, si on utilise du sable comme matériau de ladite couche dudit modèle analogique, on utilise des marqueurs formés par des particules de verre expansé, de préférence de taille comprise entre 500 µm et 1000 µm.

6. Procédé selon l'une des revendications précédentes, dans lequel, pour chacune desdites couches dudit modèle analogique, si la ladite couche géologique correspondante a un comportement mécanique ductile, on utilise de la silicone comme matériau de ladite couche dudit modèle analogique.

7. Procédé selon la revendication 6, on utilise des marqueurs formés par des particules de verre expansé enrobées d'iodure de potassium.

8. Procédé selon l'une des revendications précédentes, dans lequel ladite méthode de flux optique est choisie parmi la famille des méthodes différentielles d'estimation du flux optique, ladite méthode de flux optique de la famille des méthodes différentielles d'estimation du flux optique pouvant être une méthode globale ou une méthode locale.

9. Procédé selon la revendication 8, dans lequel ladite méthode de flux optique de la famille des méthodes différentielles d'estimation du flux optique est une méthode locale, et dans lequel, on utilise une méthode de détection de coins pour sélectionner des points desdites images tridimensionnelles sur lesquels ladite méthode de flux optique de la famille des méthodes différentielles locale est appliquée, on obtient des vecteurs de déplacement auxdits points sélectionnés pour une desdites images tridimensionnelles de chacun desdits couples desdites images tridimensionnelles, et on interpole lesdits vecteurs de déplacement obtenus auxdits points sélectionnés pour une desdites images tridimensionnelles de chacun desdits couples desdites images tridimensionnelles afin de déterminer ledit champ de déplacement pour chacun desdits couples desdites images tridimensionnelles.

10. Procédé selon l'une des revendications précédentes, dans lequel, à partir au moins dudit champ de déplacement déterminé pour chacun desdits couples desdites images tridimensionnelles, on construit un modèle géologique numérique de ladite formation, on réalise au moins une simulation géomécanique et/ou une simulation d'écoulement dans ladite formation au moyen dudit modèle géologique numérique, et à partir au moins de résultats de ladite au moins une simulation, on fore au moins un puits dans ladite formation pour exploiter une ressource de ladite formation ou pour stocker un fluide ou un solide dans ladite formation.

## Patentansprüche

1. Verfahren zur Quantifizierung der Bewegungen in einem analogen Modell, das den Verlauf der Verformung einer unterirdischen Formation im Laufe der geologischen Zeiten darstellt, ausgehend von geologischen und mechanischen Informationen bezüglich jeder der geologischen Schichten der Formation, aus denen mindestens eine Ablagerungsreihenfolge der geologischen Schichten, Dicken der geologischen Schichten, ein mechanisches Verhalten der geologischen Schichten und Grenzbedingungen, denen die Formation ausgesetzt war, hergeleitet werden, mittels einer Verformungsbox, um ein analoges Modell der Formation zu konstruieren, wobei die Verformungsbox mindestens eine bewegliche Wand umfassen kann oder nicht, wobei zuvor ein Skalierungsschritt angewendet wird, bei dem Dicken der Schichten des analogen Modells, die für die Dicken der geologischen Schichten repräsentativ sind, Grenzbedingungen im Maßstab des analogen Modells, die für die Grenzbedingungen repräsentativ sind, denen die Formation ausgesetzt war, und Materialien der Schichten des analogen Modells, die für das mechanische Verhalten der geologischen Schichten repräsentativ sind, definiert werden, wobei das Verfahren **dadurch gekennzeichnet ist, dass** mindestens die folgenden Schritte angewendet werden:
A) Konstruieren des analogen Modells zu einer Anfangszeit wie folgt: In der Verformungsbox wird entsprechend der Ablagerungsreihenfolge und entsprechend den Dicken der Schichten des analogen Modells eine Folge von Schichten des analogen Modells, die aus den Materialien der Schichten des analogen Modells gebildet sind, übereinander angeordnet, wobei mindestens eine der Schichten des analogen Modells eine Mehrzahl von durch Röntgenstrahlen detektierbaren Markern umfasst, wobei die Marker im Inneren der mindestens einen Schicht des analogen Modells angeordnet sind;
B) Mittels der Verformungsbox werden die Grenzbedingungen im Maßstab des analogen Modells auf das so konstruierte analoge Modell zu der Anfangszeit angewendet und wird gleichzeitig eine Folge von dreidimensionalen Bildern zwischen der Anfangszeit und einer Endzeit für eine Folge von Zeitschritten mittels einer Röntgenbildgebung erfasst, vorzugsweise mittels eines Röntgenscanners, der mit einer Tomographie gekoppelt ist;
C) Für jedes Paar aufeinander folgender dreidimensionaler Bilder in der Folge wird eine Methode des optischen Flusses angewandt, wird ein Bewegungsbereich für jedes der Paare der dreidimensionalen Bilder bestimmt und werden räumlichzeitliche Bewegungen im Inneren des analogen Modells erhalten.

2. Verfahren nach Anspruch 1, wobei für jede der Schichten des analogen Modells, wenn die entsprechende geologische Schicht ein duktiles mechanisches Verhalten aufweist, das Material der Schicht des analogen Modells zuvor mit der Mehrzahl von Markern gemischt wird und das Material in der Verformungsbox abgelagert wird.

3. Verfahren nach einem der vorhergehenden Ansprüche, wobei für jede der Schichten des analogen Modells, wenn die entsprechende geologische Schicht ein fragiles mechanisches Verhalten aufweist, das Material der Schicht des analogen Modells in die Verformungsbox geschüttet wird und im Zuge des Einschüttens des Materials die Mehrzahl von Markern eingefügt wird.

4. Verfahren nach einem der vorhergehenden Ansprüche, wobei für jede der Schichten des analogen Modells, wenn die entsprechende geologische Schicht ein fragiles mechanisches Verhalten aufweist, Sand, Glaspulver oder Glasmikroperlen als Material der Schicht des analogen Modells verwendet werden.

5. Verfahren nach Anspruch 4, wenn Sand als Material der Schicht des analogen Modells verwendet wird, Marker verwendet werden, die durch Schaumglaspartikel gebildet werden, vorzugsweise mit einer Größe zwischen 500 µm und 1000 µm.

6. Verfahren nach einem der vorhergehenden Ansprüche, wobei für jede der Schichten des analogen Modells, wenn die entsprechende geologische Schicht ein duktiles mechanisches Verhalten aufweist, Silikon als Material der Schicht des analogen Modells verwendet wird.

7. Verfahren nach Anspruch 6, Marker verwendet werden, die durch Schaumglaspartikel gebildet werden, die mit Kaliumjodid umhüllt sind.

8. Verfahren nach einem der vorhergehenden Ansprüche, wobei die Methode des optischen Flusses aus der Familie der differentiellen Methoden zur Schätzung des optischen Flusses ausgewählt wird, wobei die Methode des optischen Flusses aus der Familie der differentiellen Methoden zur Schätzung des optischen Flusses eine globale Methode oder eine lokale Methode sein kann.

9. Verfahren nach Anspruch 8, wobei die Methode des optischen Flusses aus der Familie der differentiellen Methoden zur Schätzung des optischen Flusses eine lokale Methode ist und wobei eine Methode zur Eckenerkennung verwendet wird, um Punkte der dreidimensionalen Bilder auszuwählen, auf die die Methode des optischen Flusses aus der Familie der lokalen differentiellen Methoden angewendet wird, und Bewegungsvektoren an den ausgewählten Punkten für eines der dreidimensionalen Bilder jedes der Paare der dreidimensionalen Bilder erhalten werden und die erhaltenen Bewegungsvektoren an den ausgewählten Punkten für eines der dreidimensionalen Bilder jedes der Paare der dreidimensionalen Bilder interpoliert werden, um den Bewegungsbereich für jedes der Paare der dreidimensionalen Bilder zu bestimmen.

10. Verfahren nach einem der vorhergehenden Ansprüche, wobei ausgehend mindestens von dem für jedes der Paare der dreidimensionalen Bilder bestimmten Bewegungsbereich ein digitales geologisches Modell der Formation konstruiert wird, mindestens eine geomechanische Simulation und/oder eine Fließsimulation in der Formation mittels des digitalen geologischen Modells realisiert wird und ausgehend mindestens von Ergebnissen der mindestens einen Simulation mindestens ein Bohrloch in die Formation gebohrt wird, um eine Ressource der Formation abzubauen oder um eine Flüssigkeit oder einen Feststoff in der Formation zu lagern.

## Claims

1. Method for quantifying movements in an analogue model representing the evolution of the deformation of a subterranean formation over geological time, based on mechanical and geological information relating to each of the geological layers of said formation from which are deduced at least an order of deposition of said geological layers, thicknesses of said geological layers, a mechanical behaviour of said geological layers, and boundary conditions of said formation, by means of a sand box for constructing an analogue model of said formation, said sand box optionally comprising at least one movable wall, a scaling step being applied beforehand in which thicknesses of the layers of said analogue model are defined so as to be representative of said thicknesses of said geological layers, boundary conditions at the scale of said analogue model are defined so as to be representative of said boundary conditions of said formation, and materials of the layers of said analogue model are defined so as to be representative of said mechanical behaviour of said geological layers, said method being **characterized in that** at least the following steps are applied:
A) said analogue model is constructed at an initial time in the following way: in said sand box, in said order of deposition and with said thicknesses of said layers of said analogue model, a succession of layers of said analogue model formed from said materials of said layers of said analogue model are superposed, at least one of said layers of said analogue model comprising a plurality of X-ray detectable markers, said markers being placed inside said at least one layer of said analogue model;
B) by means of said sand box, said boundary conditions are applied at the scale of said analogue model to said analogue model at said initial time thus constructed, and a succession of three-dimensional images are simultaneously acquired between said initial time and a final time for a succession of time intervals, by means of an X-ray imager, and preferably by means of an X-ray computed-tomography scanner;
C) for each pair of consecutive three-dimensional images in said succession, an optical-flow method is applied, a displacement field is determined for each of said pairs of said three-dimensional images, and movements as a function of space and of time inside said analogue model are obtained.

2. Method according to Claim 1, wherein, for each of said layers of said analogue model, if said corresponding geological layer has a ductile mechanical behaviour, said material of said layer of said analogue model is mixed beforehand with said plurality of markers, and said material is placed in said sand box.

3. Method according to either of the preceding claims, wherein, for each of said layers of said analogue model, if said corresponding geological layer has a brittle mechanical behaviour, said material of said layer of said analogue model is poured into said sand box, and said plurality of markers are inserted as said material is poured.

4. Method according to any of the preceding claims, wherein, for each of said layers of said analogue model, if said corresponding geological layer has a brittle mechanical behaviour, sand, glass powder or glass microbeads are used as the material of said layer of said analogue model.

5. Method according to Claim 4, if sand is used as the material of said layer of said analogue model, markers formed by expanded glass particles, preferably of size between 500 µm and 1000 µm, are used.

6. Method according to any of the preceding claims, wherein, for each of said layers of said analogue model, if said corresponding geological layer has a ductile mechanical behaviour, silicone is used as the material of said layer of said analogue model.

7. Method according to Claim 6, markers formed by expanded glass particles coated with potassium iodide are used.

8. Method according to any of the preceding claims, wherein said optical-flow method is chosen from the family of differential methods of estimating optical flow, said optical-flow method of the family of differential methods of estimating optical flow possibly being a global method or a local method.

9. Method according to Claim 8, wherein said optical-flow method of the family of differential methods of estimating optical flow is a local method, and wherein a corner-detection method is used to select in said three-dimensional images points to which said optical-flow method of the family of local differential methods is applied, displacement vectors are obtained at said selected points for one of said three-dimensional images of each of said pairs of said three-dimensional images, and said displacement vectors obtained at said selected points are interpolated for one of said three-dimensional images of each of said pairs of said three-dimensional images in order to determine said displacement field for each of said pairs of said three-dimensional images.

10. Method according to any of the preceding claims, wherein, based at least on said displacement field determined for each of said pairs of said three-dimensional images, a digital geological model of said formation is constructed, at least one geomechanical simulation and/or flow simulation is carried out in said formation by means of said digital geological model, and based at least on results of said at least one simulation, at least one well is drilled in said formation with a view to extracting a resource from said formation or to storing a fluid or solid in said formation.
